(19) Europäisches Patentamt
European Patent Office
Office européen des brevets

(11) **EP 1 260 074 B1**

(12) **EUROPÄISCHE PATENTSCHRIFT**

(45) Veröffentlichungstag und Bekanntmachung des Hinweises auf die Patenterteilung:
**16.09.2009   Patentblatt 2009/38**

(51) Int Cl.:
**H04L 27/34** *(2006.01)*

(21) Anmeldenummer: **01910099.9**

(22) Anmeldetag: **23.02.2001**

(86) Internationale Anmeldenummer:
**PCT/IB2001/000397**

(87) Internationale Veröffentlichungsnummer:
**WO 2001/063871 (30.08.2001 Gazette 2001/35)**

(54) **CODIERVERFAHREN UND VERWENDUNG EINES EMPFANGSGERÄTS MIT EINEM FALTUNGSDECODER**

CODING METHOD AND USE OF A RECEIVER WITH A CONVOLUTIONAL DECODER

PROCEDE DE CODAGE ET UTILISATION D'UN RECEPTEUR A DECODEUR DE CODE A CONVOLUTION

(84) Benannte Vertragsstaaten:
**ES FR GB IT SE**

(30) Priorität: **24.02.2000   DE 10008543**

(43) Veröffentlichungstag der Anmeldung:
**27.11.2002   Patentblatt 2002/48**

(73) Patentinhaber: **Ericsson AB
Stockholm (SE)**

(72) Erfinder:
• **SEIER, Udo
71672 Marbach (DE)**
• **MUELLER, Joerg-Martin
70619 Stuttgart (DE)**
• **ENGEL, Andreas
74535 Mainhardt (DE)**

(74) Vertreter: **Manitz, Finsterwald & Partner GbR
Postfach 31 02 20
80102 München (DE)**

(56) Entgegenhaltungen:
**US-A- 5 931 965         US-A- 6 005 897**

• **HAYASHI S ET AL: "PERFORMANCE OF TRELLIS-CODED 16-STATE DIFFERENTIALLY ENCODED APSK ON RAYLEIGH FADING CHANNEL" IEEE INTERNATIONAL CONFERENCE ON UNIVERSAL PERSONAL COMMUNICATIONS, Bd. 4, 6. November 1995 (1995-11-06), Seiten 32-36, XP000689906 IEEE, NEW YORK, US ISBN: 0-7803-2955-4**
• **LAU H K ET AL: "A PILOT SYMBOL-AIDED TECHNIQUE USED FOR DIGITAL SIGNALS IN MULTIPATH ENVIRONMENTS" INTERNATIONAL CONFERENCE ON COMMUNICATIONS (ICC), Bd. -, 1. Mai 1994 (1994-05-01), Seiten 1126-1130, XP000438676 IEEE, NEW YORK, US**

**Beschreibung**

Die Erfindung betrifft ein Codierverfahren zur Modulation von Trägersignalen mit 16 verschiedenen digitalen Zuständen (4-Bit-Signale).

Die Erfindung betrifft ferner die Verwendung eines Empfangsgeräts mit einem Faltungsdecoder, dessen Codierparameter nach dem Codierverfahren bestimmt sind.

Stand der Technik

Für die Übertragung digitaler Signale wird insbesondere eine 16-PSK-Codierung verwendet, bei der 16 verschiedene Phasenlagen, also Phasenunterschiede von 22,5° detektierbar sein müssen. Bei diesem Verfahren können somit 16 verschiedene digitale Zustände, also 4-Bit-Wörter, mit einer Phaseninformation übertragen werden.

Der Übertragungsweg unterliegt-unter praktischen Bedingungen nicht unerheblichen Störungen. Im Empfänger besteht daher die Aufgabe, aus sämtlichen möglichen ungestörten Empfangsfolgen diejenigen auszuwählen, die mit höchster Wahrscheinlichkeit durch die gestörte Empfangsfolge übertragen werden sollte. Die Berechnung der höchsten Wahrscheinlichkeit erfolgt dadurch, daß die minimale euklidische Distanz zwischen den möglichen ungestörten Empfangsfolgen und der aktuell beobachteten gestörten Empfangsfolge bestimmt wird. Sind grundsätzlich alle Empfangsfolgen denkbar, entsteht ein für praktische Anwendungen zu hoher Rechenaufwand. Es ist daher bekannt, die Berechnung der höchsten Wahrscheinlichkeit im Empfänger rekursiv auszuführen und während der Rekursion ein Großteil von Sequenzen als nicht möglich auszuscheiden. Hierzu wird ein von Viterbi angegebener Algorithmus zur Decodierung von Faltungscodes verwendet, so daß der Empfänger mit einem sogenannten Viterbidecoder ausgestattet ist. Die Begrenzung der Berechnung der möglichen Codewortfolgen erfolgt durch Bestimmung von möglichen Zustandsübergängen mit Hilfe eines Trellis-Diagramms.

Die Verwendung eines 16 digitale Zustände unterscheidenden Codes ist für die übertragbare Datendichte, und damit die Übertragungsgeschwindigkeit, von Vorteil. Bei der Verwendung eines 16-PSK-Codes entsteht allerdings das Problem der verringerten Synchronisationsrobustheit, da im Empfänger relativ geringe Phasenunterschiede detektierbar sein müssen. Durch DE 195 29 982 A1 und 195 29 983 A1 sind Verfahren bekannt, die Synchronisationsrobustheit für die TC 16-PSK-Übertragung dadurch zu erhöhen, daß während der Trackingphase eine Auswertung von sogenannten Best-State-Informationen des empfangsseitigen Viterbidecoders vorgenommen wird. Dadurch läßt sich bei dieser Übertragungsart annähernd die Synchrbnisationsrobustheit wie bei einer 8-PSK-Konstellation erreichen.

Ein entscheidendes Gütekriterium ist ferner der "Codierungsgewinn", der sich in Bezug zu einer uncodierten Übertragung erzielen lässt. Codierverfahren nach dem Oberbegriff des Anspruchs 1 sind aus US 6 005 897A, US 5 931 965A oder Hayashi et al. IEEE Int. Conf. on Universal Personal Communications, Bd. 4,6 Nov, 1995, S .32-36 XP 000689506, IEEE, New York, US, ISBN 0-7803-2995-4 bekannt.

Vorteile der Erfindung

Der Erfindung liegt die Problemstellung zugrunde, mit einem neuen Codierverfahren Verbesserungen hinsichtlich der Synchronisationsrobustheit und des Codierungsgewinns zu ermöglichen.

Die Aufgabe wird gelöst durch ein Verfahren mit den Merkmalen des Anspruchs 1. Unteransprüche sind auf vorteilhafte Weiterbildung sowie auf die Verwendung eines Empfangsgeräts zum Decodieren eines mit dem erfindungsgemäßen Vefahrens codierten Signals gerichtet.

Die Erfindung gibt somit ein Dimensionierungsverfahren an, durch das die minimalen euklidischen Abstände maximiert werden, so daß ein erhöhter Codierungsgewinn für die hier verwendete 2 ASK/8 PSK-Codierung erzielt wird. Da erfindungsgemäß für praktikable Anwendungen mit der erfindungsgemäßen 2 ASK/8 PSK-Codierung ein sogar höherer Codierungsgewinn erzielt wird als mit der üblicherweise verwendeten TC 16-PSK-Codierung, ist das erfindungsgemäße Codierverfahren überlegen. Darüber hinaus läßt sich die erwähnte Verbesserung der Synchronisationsrobustheit gemäß DE 195 29 982 AI bzw. DE 195 29 983 AI auch bei dem erfindungsgemäßen Verfahren anwenden, wobei annähernd die Synchronisationsrobustheit von 4 PSK erzielt wird.

Die Erfindung bietet ferner den Vorteil, daß herkömmliche Empfangsgeräte mit einem Viterbidecoder verwendet werden können, die nur geringfügig für ihre Verwendung zum Empfang erfindungsgemäß codierter Signale geändert werden müssen. Im allgemeinen ist nur eine Anpassung der sogenannten Branch-Metrik-Tabelle erforderlich.

Es zeigt sich, daß die FM-Empfindlichkeit bei dem Empfang erfindungsgemäß codierter Signale gegenüber den nach TC 16-PSK codierten Signalen um etwa 3 dB verbessert werden kann.

Zeichnungen

Die Erfindung soll im folgenden anhand der beigefügten Zeichnung näher erläutert werden. Es zeigen:

Figur 1 eine erfindungsgemäße 2 ASK/8 PSK-Symbolkonstellation mit 4 Subsets, die durch identische 2 LSB gebildet sind

Figur 2 eine Darstellung der Bitfehlerrate in Abhängigkeit von dem auf ein Bit bezogenen Störabstandsmaß $E_b/N_o$.

Beschreibung von Ausführungsbeispielen

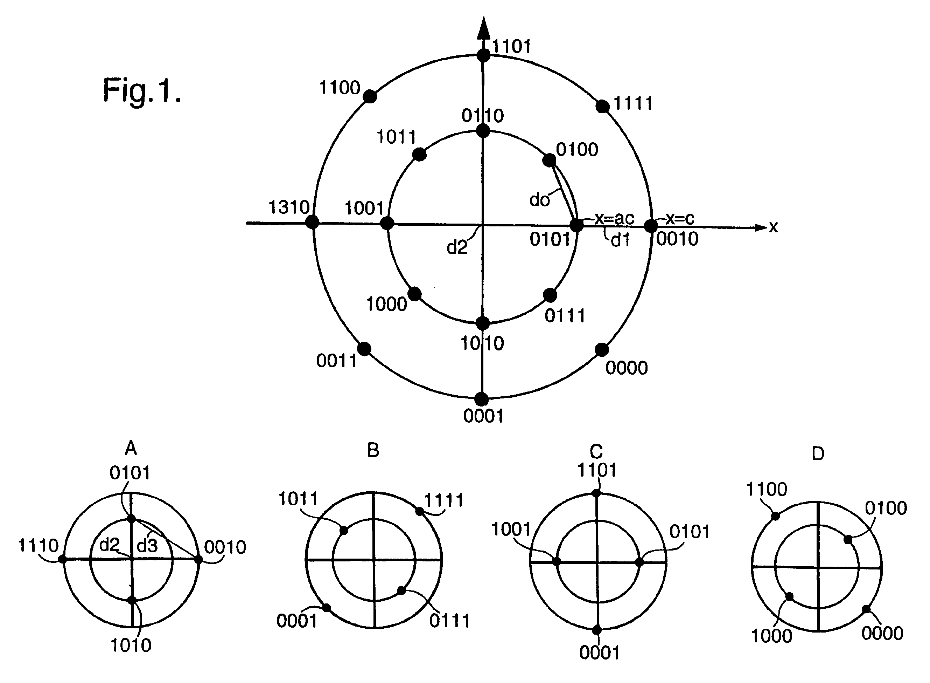

Die Erfindung wird am Beispiel eines speziellen Faltungscodes (pragmatische Trelliscodierung) erläutert. Figur 1 zeigt eine 2 ASK/8 PSK-Symbolkonstellation, wie sie erfindungsgemäß verwendbar ist. Die durch übereinstimmende 2 LSB (Least Significant Bits) gebildete Zuordnung zu Subsets A, B, C, D ist grundsätzlich beliebig. Die in Figur 1 dargestellte Zuordnung (Mapping) ist optimal für die spezielle Realisierung bei einer pragmatischen Trelliscodierung.

In üblicher Weise wird nun ein Faltungscode gewählt. Für diesen Faltungscode werden nach dem erfindungsgemäßen Dimensionierungsverfahren alle Codewortfolgen mit der freien Distanz des Faltungscodes ermittelt. Es wird angenommen, daß CWMAX solcher Codewortfolgen existieren. Der Laufindex wird mit cw = 0... CWMAX - 1 bezeichnet.

Für den erfindungsgemäßen Entwurf der 2 ASK/8 PSK-Symbolkonstellation wird die minimale euklidische Distanz des trelliskodierten Symbolalphabets als Maß für das asymptotische Fehlerverhalten berechnet. Diese minimale Distanz berechnet sich nach der Formel:

$$d_{min} = \min (d^{cod}_{min}, d^{uncod}_{min}).$$

Dabei berücksichtigt der linke Teil in der Klammer die minimale euklidische Distanz des codierten Informationsbits. Dieser Term wird vom gewählten Mapping und den Eigenschaften des verwendeten Faltungscodes bestimmt. Der rechte Teil berücksichtigt, die minimale euklidische Distanz in der Partition der dritten Ebene (4*4 Punkte), d.h. der minimale Abstand der beiden nicht geschützten Informationsbits. Diese Größe kann direkt aus geometrischen Berechnungen gewonnen werden.

Der bei der pragmatischen Trelliscodierung üblicherweise verwendete Faltungscode (Generatorpolynom (octal): 133, 171) besitzt eine freie Distanz von 10. Zur Berechnung der minimalen Distanz des codierten Informationsbits muß der minimale euklidische Abstand der Codewortfolge mit dem Outputgewicht 10 von der Codewortfolge mit dem Gewicht 0 (also der Dauernullfolge) bestimmt werden.

Die nachfolgende Tabelle gibt alle möglichen 11 Codewortfolgen mit Outputgewicht 10 an.

|    | Input Gewicht | Codewort-Folge |
|----|---------------|----------------|
| 1  | 1 | (1.1) (1.0) (0.0) (1.1) (1.1) (0.1) (1.1) |
| 2  | 2 | (1.1) (0.1) (1,0) (1.1) (0.0) (1.0) (1.0) (1.1) |
| 3  | 3 | (1.1) (0.1) (0.1) (0.1) (0.1) (0.0) (0.1) (0.1) (1.0) (1.1) |
| 4  | 2 | (1.1) (1.0) (0.0) (0.0) (0.1) (0.1) (0.0) (1.1) (0.1) (1.1) |
| 5  | 3 | (1.1) (0.1) (1.0) (0.0) (1.0) (1.0) (0.1) (0.0) (0.1) (1.1) |
| 6  | 3 | (1.1) (1.0) (1.1) (0.1) (0.0) (0.0) (0.0) (1.0) (0.0) (0.1) (1.1) |
| 7  | 3 | (1.1) (1.0) (0.0) (0.0) (1.0) (1.1) (0.0) (0.0) (1.0) (1.0) (1.1) |
| 8  | 4 | (1.1) (1.0) (0.0) (0.0) (1.0) (0.0) (1.0) (0.0) (0.1) (0.1) (1.0) (1.1) |
| 9  | 5 | (1.1) (0.1) (0.1) (0.1) (0.0) (1.0) (0.0) (0.0) (0.0) (0.0) (1.0) (1.0) (1.1) |
| 10 | 4 | (1.1) (1.0) (0.0) (0.0) (0.1) (1.0) (1.0) (0.0) (0.0) (0.0) (1.0) (0.0) (0.1) (1.1) |
| 11 | 6 | (1.1) (1.0) (0.0) (0.0) (1.0) (0.0) (1.0) (0.0) (1.0) (0.0) (0.0) (0.0) (0.0) (1.0) (1.0) (1.1) |

Die euklidische Distanz einer Codewortfolge berechnet sich aus

$$d_{Pfad} = \sqrt{n \cdot d_{11}^2 + m \cdot d_{01}^2 + k \cdot d_{10}^2}$$

Dabei bezeichnet

- $d_{11}$ die minimale geometrische Distanz eines 00 -> 11 Übergangs und n die Anzahl dieser Übergänge in der betrachteten Codewortfolge

- $d_{01}$ die minimiale geometrische Distanz eines 00 -> 01 Übergangs und m die Anzahl dieser Übergänge in der betrachteten Codewortfolge

- $d_{10}$ die minimiale geometrische Distanz eines 00 -> 10 Übergangs und k die Anzahl dieser Übergänge in der betrachteten Codewortfolge.

Diese Distanz ist somit abhängig vom gewählten Mapping und den Eigenschaften des Faltungscodes.

Für die Wahl des Mapping wird eine Zuteilung der 2 LSBs zu den Subsets A, B, C und D vorgenommen.

Insgesamt gibt es 24 Mappingzuordnungen, die in der nachfolgenden Tabelle dargestellt sind. Der Laufindex map läuft somit zwischen 0 und 23.

| map | Subset A | Subset B | Subset C | Subset D |
|---|---|---|---|---|
| 0 | 00 | 01 | 10 | 11 |
| 1 | 00 | 01 | 11 | 10 |
| 2 | 00 | 10 | 01 | 11 |
| 3 | 00 | 10 | 11 | 01 |
| 4 | 00 | 11 | 01 | 10 |
| 5 | 00 | 11 | 10 | 01 |
| 6 | 01 | 00 | 10 | 11 |
| 7 | 01 | 00 | 11 | 10 |
| S | 01 | 10 | 00 | 11 |
| 9 | 01 | 10 | 11 | 00 |
| 10 | 01 | 11 | 00 | 10 |
| 11 | 01 | 11 | 10 | 00 |
| 12 | 10 | 00 | 01 | 11 |
| 13 | 10 | 00 | 11 | 01 |
| 14 | 10 | 01 | 00 | 11 |
| 15 | 10 | 01 | 11 | 00 |
| 16 | 10 | 11 | 00 | 01 |
| 17 | 10 | 11 | 01 | 00 |
| 18 | 11 | 00 | 01 | 10 |
| 19 | 11 | 00 | 10 | 01 |
| 20 | 11 | 01 | 00 | 10 |
| 21 | 11 | 01 | 10 | 00 |
| 22 | 11 | 10 | 00 | 01 |
| 23 | 11 | 10 | 01 | 00 |

Die Zuordnung der 2 MSBs ist für die hier beschriebene Dimensionierung irrelevant.

Für den gewählten Faltungscode und ein gewähltes Mapping map wird die dafür optimale Dimensionierung durchgeführt. Im allgemeinen ist diese für alle 24 möglichen Zuordnungen nach der Tabelle durchzuführen. Die über alles gesehene optimale Lösung ist dann dasjenige Mapping, bei dem nach Bestimmung der Radien nach dem beschriebenen Verfahren die sich ergebende minimale euklidische Distanz maximal ist.

Als Dimensionierungsgleichungen gelten:

1. Normierung: (mittlere Sendeleistung = 1) $8(ac)^2 + 8c^2 = 16$

2.

$$d_{min}^{cod} = d_{min}^{uncod} \Rightarrow$$
$$n \cdot d_{11}^2 + m \cdot d_{01}^2 + k \cdot d_{10}^2 = (2ac)^2$$
$$\text{falls } 2ac \leq \sqrt{c^2 + (ac)^2} \qquad (a \leq 0.577)$$
$$\text{oder } n \cdot d_{11}^2 + m \cdot d_{01}^2 + k \cdot d_{10}^2 = c^2 + (ac)^2$$
$$\text{falls } 2ac \geq \sqrt{c^2 + (ac)^2} \qquad (a \geq 0,577)$$

Dabei gelten für n, m und k sowie $d_{11}$, $d_{01}$ und $d_{10}$ die oben bereits erläuterten Festlegungen. Die minimalen geometrischen Abstände $d_{xx}$ sind mittels der Parameter a und c mit $a \leq 1$ auszudrücken, so daß die Gleichungen 1 und 2 die Bestimmungsgleichungen für a und c darstellen. Diese Bestimmungsgleichungen sind für alle Codewortfolgen cw = 0...CWMAX - 1 mit der freien Distanz des verwendeten Faltungscodes und allen 24 verschiedenen Zuordnungen map = 0...23 auszuwerten.

Für alle Wertepaare (a(cw,map), c(cw,map) ist dasjenige Wertepaar (a(cw$_{opt}$, map$_{opt}$), c(cw$_{opt}$, map$_{opt}$)) zu verwenden, das für alle Codewortfolgen mit der freien Distanz des verwendeten Faltungscodes die maximalen Werte für die Paare (d$^{cod}$$_{min}$(cw,map), d$^{uncod}$$_{min}$(cw,map)) ergibt. Dabei ist zuvor zu prüfen, ob die in den Bestimmungsgleichungen angesetzten minimalen euklidischen Abstände $d_{11}$, $d_{10}$ und $d_{01}$ für das daraus ermittelte Wertepaar (a(cw$_{opt}$, map$_{opt}$), c(cw$_{opt}$, map$_{opt}$)) auch tatsächlich den jeweiligen minimalen Abstand darstellen.

Wird das Mapping gemäß Figur 1 gewählt, ergeben sich die Dimensionierungsgleichungen wie folgt:

1.Normierung: (mittlere Sendeleistung = 1)

$$8(ac)^2 + 8c^2 = 16$$

2.

$$d_{min}^{cod} = d_{min}^{uncod} \Rightarrow$$
$$n \cdot d_{11}^2 + (m+k) \cdot d_{01/10}^2 = (2ac)^2$$
$$\text{falls } 2ac \leq \sqrt{c^2 + (ac)^2} \qquad (a \leq 0,577)$$
$$\text{oder } n \cdot d_{11}^2 + (m+k) \cdot d_{01/10}^2 = c^2 + (ac)^2$$
$$\text{falls } 2ac \geq \sqrt{c^2 + (ac)^2} \qquad (a \geq 0,577)$$

mit $d_{11} = d_1 = c - ac$ falls $c - ac \leq ac\sqrt{2}$ $\qquad (a \geq 0,4142)$

oder $d_{11} = d_1 = ac\sqrt{2}$ falls $ac\sqrt{2} \leq c - ac$ $(a \leq 0,4142)$

und $d_{01} = d_{10} = d_0 = ac\sqrt{2(1 - \sqrt{0,5})}$.

Die so beschriebene Dimensionierung der 2 ASK/8 PSK-Symbolkonstellation stellt den allgemeinen Fall dar. In der Praxis wird sich eine vereinfachte Dimensionierung anbieten. Hierzu kann vorausgesetzt werden, daß

$d_1 = d_{11} \leq \sqrt{2} \cdot d_0 = 2 \cdot d_{01} = \sqrt{2} \cdot d_{10}$ gilt. In diesem Fall ist die Codewortfolge mit maximalem n = n$_{max}$ (d.h. die Codewortfolge mit der maximalen Anzahl von Codeworten 11) die "Worst-Case-Folge", die letztlich die Parameter a und c bestimmt. Nur für diesen Fall wurden die Parameter a und c bestimmt

(a = 0, 5432 c = 1,24270, $d_1$ = 0,56765 und $d_0$ = 0,56765; also $d_1 \leq \sqrt{2} \cdot d_0$) und für alle Codewortfolgen die euklidischen Distanzen bestimmt. Wie erwartet bestimmt die Codewortfolge mit n = n$_{max}$ die minimale Distanz d$^{cod}$$_{min}$, was entsprechend Entwurfskriterium gleich d$^{uncod}$$_{min}$ ist. Auswertung der Dimensionierungsgleichungen für alle anderen Codewortfolgen ergibt für die jeweils betrachtete Codewortfolge $d^{cod}_{min} = d^{uncod}_{min}$. Für die Codewortfolge mit $n = n_{max}$ ist dann $d^{cod}_{min} \neq$

$d^{uncod}_{min}$ und das Minimum davon $(Min(d^{cod}_{min} \cdot d^{uncod}_{min})$ ist kleiner als bei spezieller Berechnung des Wertepaares (a.c) für diese Codewortfolge.

Mit den oben ermittelten Werten beträgt die minimale Distanz in der Partition der dritten Ebene $d^{uncod}_{min} = 2$ ac = 1,350.

Zum Vergleich der euklidischen Distanzen zwischen der herkömmlichen 16 PSK und der erfindungsgemäßen 2 ASK/8 PSK-Konfiguration sind in der nachfolgenden Tabelle die minimalen euklidischen Distanzen für die Codewortübergänge 00 -> 11 und 00 -> 01/10 sowie zwischen benachbarten Symbolen des dritten Partitionsschrittes zusammengefaßt.

| eukl. Distanz | 2 ASK/8 PSK | 16 PSK |
|---|---|---|
| $d_0 = d_{11}$ | 0.5166 | 0.3902 |
| $d_1 = d_{10} = d_{01}$ | 0.5677 | 0.7654 |
| $d_2 = d^{uncod}_{min}$ | 1.3501 | 1.4142 |

Asymptotischer Codierungsgewinn

Für die vorab dimensionierte Konstellation wird nun für jede Codefolge mit Outputgewicht 10 die euklidische Distanz berechnet und mit TC 16-PSK verglichen.

Es gilt

für TC 16-PSK: $d_1 = d_{11} = 0,7654$, $d_0 = d_{01} = d_{10} = 0,3902$

für 2 ASK/8 PSK: $d_1 = d_{11} = 0,5677$, $d_0 = d_{01} = d_{10} = 0,5167$

| Codefolge | n | m | k | Distanz für TC16-PSK | Distanz für 2ASK/8PSK |
|---|---|---|---|---|---|
| 0 | 4 | 1 | 1 | 1.627 | 1.350 |
| 1 | 3 | 1 | 3 | 1.538 | 1.426 |
| 2 | 2 | 5 | 1 | 1.444 | 1.499 |
| 3 | 3 | 1 | 3 | 1.538 | 1.426 |
| 4 | 2 | 3 | 3 | 1.444 | 1.499 |
| 5 | 3 | 2 | 2 | 1.538 | 1.426 |
| 6 | 3 | 0 | 4 | 1.538 | 1.426 |
| 7 | 2 | 2 | 4 | 1.444 | 1.499 |
| 8 | 2 | 3 | 3 | 1.444 | 1.499 |
| 9 | 2 | 2 | 4 | 1.444 | 1.499 |
| 10 | 2 | 0 | 6 | 1.444 | 1.499 |

Aus der Tabelle ist abzulesen, daß

$d^{cod}_{min} = d^{uncod}_{min} = 1,350$ beträgt.

Der asymptotische Codierungsgewinn gegenüber TC 16-PSK ist nun:

$$G = 20 \cdot \lg \frac{d^{TC8\text{-}8PSK/ASK}_{min}}{d^{TC16\text{-}PSK}_{min}} = 20 \cdot \lg \frac{1.350}{\sqrt{2}} = -0.4 dB$$

Dies bedeutet, daß die neue Konstellation asymptotisch um 0,4 dB schlechter ist als TC 16-PSK.

Fehlerraten

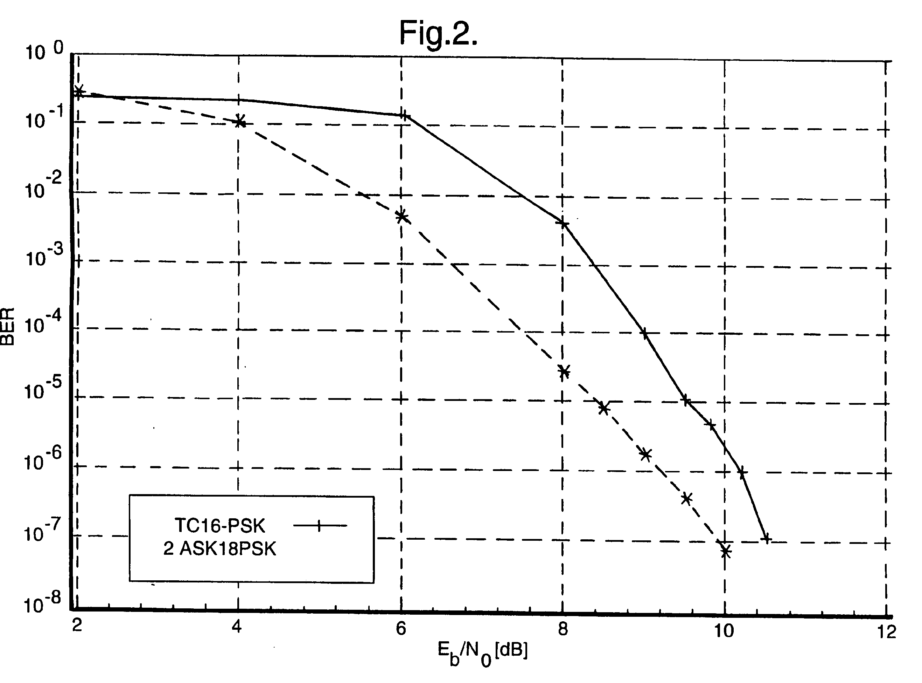

Der Verlauf der Bitfehlerraten über $E_{bit}/N_0$ der 2 ASK/8 PSK-Konstellationen ist in Figur 2 im Vergleich zu TC 16-PSK dargestellt. Die verwendete Codierung ist in beiden Fällen die pragmatische Trelliscodierung mit dem zuvor ausgewählten Faltungscode.

Die folgende Tabelle dokumentiert die Codierungsgewinne, die mit dieser Konstellation gegenüber TC 16-PSK zu erzielen sind.

| Bitfehlerrate | Codierungsgewinn von TC8-8-PSK/ASK gegenüber TC16-PSK |
|---|---|
| $10^{-2}$ | 1.9 dB |
| $10^{-3}$ | 1.8 dB |
| $10^{-4}$ | 1.5 dB |
| $10^{-5}$ | 1.2 dB |
| $10^{-6}$ | 1.0 dB |
| $10^{-7}$ | 0.6 dB |
| asymptotisch | -0.4 dB |

Wie bei TC 16-PSK-Betrieb können auch bei der Konstellation von Figur 1 für 2 ASK/8 PSK Hilfssignale für die Trägerableitung durch Auswertung der Best-State-Metrik des Viterbidecoders gewonnen werden. Diese Hilfssignale geben an, ob beim empfangenen Symbol die zwei LSBs gleich oder ungleich sind. Diese Information genügt beim vorliegenden Mapping, um zu entscheiden, ob der empfangene Signalpunkt um ungeradzählige Vielfache von 45° oder Vielfache von 90° gegenüber dem Referenzträger verdreht ist. Dementsprechend gelingt es für die 16 Symbole enthaltene Konstellation von Figur 1, hinsichtlich der Synchronisation annähernd die Robustheit einer QPSK-Konstellation zu erreichen.

Das beschriebene Ausführungsbeispiel zeigt, daß mit der erfindungsgemäßen Codierung ein Codierungsgewinn im Fehlerratenbereich $10^{-6}$ bis $10^{-2}$ zwischen 1,0 und 2,0 dB gegenüber dem Stand der Technik TC 16-PSK erzielt werden kann.

Der asypmptotische Verlust von 0,4 dB ist für praktische Systeme, die in Fehlerratenbereichen zwischen $10^{-8}$ und $10^{-4}$ betrieben werden, nicht relevant.

Die Synchronisation für die erfindungsgemäße Symbolkonstellation ist robuster als bei TC 16-PSK, da nur 8 erlaubte Winkel in der komplexen Ebene existieren. Wie bei TC 16-PSK kann auch bei dem erfindungsgemäßen Verfahren während der Trackingphase durch Auswertung von sogenannten Best-State-Informationen des empfangsseitigen Viterbidecoders annähernd die Synchronisationsrobustheit wie bei einer QPSK-Konstellation erreicht werden.

**Patentansprüche**

1. Codierverfahren zur Modulation von Trägersignalen mit 16 verschiedenen digitalen Zuständen (4-Bit-Signale), dessen Codierparameter mit folgenden Verfahrensschritten erhalten werden:

   a) Verwendung einer 2ASK/8PSK-Codierung
   b) Wahl eines Faltungscodes und Ermittlung aller möglichen Codewortfolgen mit der freien Distanz des Faltungscodes
   c) Bildung von möglichen Mappings durch Zuteilung einer Teilmenge der 2ASK/8PSK Kanalbits zu Subsets
   d) Auswahl desjenigen Mappings, bei dem nach Bestimmung der optimalen Radien (ac, c) der beiden Amplituden für jedes mögliche Mapping die sich ergebende minimale euklidische Distanz zwischen zwei möglichen Subsetabfolgen -Codewortfolge- maximal wird, **dadurch gekennzeichnet, dass** zur Bestimmung der optimalen Radien (ac,c) folgende Bestimmungsgleichungen verwendet werden:

$$8\,(ac)^2 + 8\,c^2 = 16$$

$$n \cdot d_{11}^2 + m \cdot d_{01}^2 + k \cdot d_{10}^2 = (2ac)^2$$

für

$$2ac \leq \sqrt{c^2 + (ac)^2}$$

$$n \cdot d_{11}^2 + m \cdot d_{01}^2 + k \cdot d_{10}^2 = c^2 + (ac)^2$$

für

$$2ac \geq \sqrt{c^2 + (ac)^2} \, ,$$

wobei $d_{11}$ die minimale geometrische Distanz eines Subset-Übergangs 00 -> 11 und n die Anzahl dieser Übergänge in der betrachteten Codewortfolge,
$d_{01}$ die minimale geometrische Distanz eines Subset-Übergangs 00 -> 01 und m die Anzahl dieser Übergänge in der betrachteten Codewortfolge und
$d_{10}$ die minimale geometrische Distanz eines Subset-Übergangs 00 -> 10 und k die Anzahl dieser Übergänge in der betrachteten Codewortfolge ist.

2. Codierverfahren nach Anspruch 1, **dadurch gekennzeichnet, daß** die Subsets (A, B, C, D) so gewählt werden, daß gilt

$$d_{11} = d_1 = c - ac$$

für

$$c - ac \leq ac \cdot \sqrt{2}$$

oder

$$d_{11} = d_1 = ac \cdot \sqrt{2}$$
$$\text{für} \quad ac \cdot \sqrt{2} \leq c - ac$$

und

$$d_{01} = d_{10} = d_0 = ac \sqrt{(1 - \sqrt{0,5})} \, .$$

3. Codierverfahren nach Anspruch 2, **dadurch gekennzeichnet, daß** für die Berechnung der optimalen radien (ac, c) vereinfachend vorausgesetzt wird:

$$d_1 \leq \sqrt{2} \cdot d_0 \, .$$

4. Verwendung eines Empfangsgeräts mit einem Faltungsdecoder, insbesondere einem Viterbidecoder, zum Empfang und zur Decodierung dessen Codierparameter nach den Schritten der vorherigen Ansprüche bestimmt sind.

5. Verwendung nach Anspruch 4, bei der die Ableitung des Trägers mit Hilfssignalen des Faltungsdecoders unterstützt wird.

**Claims**

1. Coding method for the modulation of carrier signals with 16 different digital states (4-bit-signals), the coding parameters of which are obtained with the following method steps:

   a) use of a 2ASK/8PSK-Coding
   b) selection of a folding code and determination of all possible codeword sequences with the free distance of the folding code
   c) formation of possible mappings by allocation of a part quantity of the 2ASK/8PSK channel bits to subsets
   d) selection of those mappings in which, after determination of the ideal radii (ac, c) of the two amplitudes for each possible mapping, the resulting minimal euclidic distance between two possible subset sequences - codeword sequence - is a maximum,

   **characterised in that**
   for the determination of the ideal radii (ac, c), the following determination equations are used:

   $$8 \ (ac)^2 + 8 \ c^2 = 16$$

   $$n \cdot d_{11}^2 + m \cdot d_{01}^2 + k \cdot d_{10}^2 = (2ac)^2$$

   for

   $$2ac \leq \sqrt{c^2 + (ac)^2}$$

   $$n \cdot d_{11}^2 + m \cdot d_{01}^2 + k \cdot d_{10}^2 = c^2 + (ac)^2$$

   for

   $$2ac \geq \sqrt{c^2 + (ac)^2} \ ,$$

   wherein $d_{11}$ is the minimum geometrical distance of a subset transition 00 -> 11 and n is the number of these transitions in the codeword sequence considered,
   $d_{01}$ is the minimum geometrical distance of a subset transition 00 - >01 and m is the number of these transitions in the codeword sequence considered,
   $d_{10}$ is the minimum geometrical distance of a subset transition 00 -> 10 and k is the number of these transitions in the codeword sequence considered.

2. Coding method in accordance with claim 1,
   **characterised in that** the subsets (A, B, C. D) are so selected that

$$d_{11} = d_1 = c - ac$$

$$\text{for} \quad c - ac \le ac \cdot \sqrt{2}$$

or

$$d_{11} = d_1 = ac \cdot \sqrt{2}$$

$$\text{for} \quad ac \cdot \sqrt{2} \le c - ac$$

and

$$d_{01} = d_{10} = d_0 = ac \sqrt{(1 - \sqrt{0,5})}.$$

3. Coding method in accordance with claim 2, **characterised in that** for the calculation of the ideal radii (ac, c) it is assumed as a simplification that:

$$d_1 \le \sqrt{2} \cdot d_0.$$

4. Use of a receiving apparatus having a folding decoder, in particular a Viterbi decoder for the receiving and decoding, the coding parameters of which are determined in accordance with the steps of the preceding claims.

5. Use in accordance with claim 4, in which the derivation of the carrier is supported by auxiliary signals of the folding decoder.

**Revendications**

1. Procédé de codage pour la modulation de signaux porteurs avec 16 états numériques différents (signaux à 4 bits) dont les paramètres de codage sont obtenus par les étapes suivantes :

a) utilisation d'un codage 2MDA/8MDP,
b) choix d'un code de convolution et détermination de toutes les séquences de mots de code possibles présentant la distance libre du code de convolution,
c) construction de projections possibles par attribution d'une partie des bits de canaux 2MDA/8MDP à des sous-ensembles,
d) sélection de la projection pour laquelle, après détermination des rayons optimaux (ac, c) des deux amplitudes pour chaque projection possible, la distance euclidienne minimale obtenue entre deux suites de sous-ensembles ou deux séquences de mots de code, devient maximale,

**caractérisé en ce que**, pour déterminer les rayons optimaux (ac, c), on utilise les équations de détermination suivantes :

$$8\,(ac)^2 + 8\,c^2 = 16$$

$$n \cdot d_{11}^{\,2} + m \cdot d_{01}^{\,2} + k \cdot d_{10}^{\,2} = (2ac)^2$$

pour

$$2ac \leq \sqrt{c^2 + (ac)^2}$$

$$n \cdot d_{11}^2 + m \cdot d_{01}^2 + k \cdot d_{10}^2 = c^2 + (ac)^2$$

pour

$$2ac \geq \sqrt{c^2 + (ac)^2} \; ,$$

où $d_{11}$ est la distance géométrique minimale d'une transition de sous-ensemble 00 -> 11 et n est le nombre de ces transitions dans la séquence de mots de code considérée,

$d_{01}$ est la distance géométrique minimale d'une transition de sous-ensemble 00 -> 01 et m est le nombre de ces transitions dans la séquence de mots de code considérée, et $d_{10}$ est la distance géométrique minimale d'une transition de sous-ensemble 00 -> 10 et k est le nombre de ces transitions dans la séquence de mots de code considérée.

2. Procédé de codage selon la revendication 1,
**caractérisé en ce que** les sous-ensembles (A, B, C, D) sont choisis de façon que :

$$d_{11} = d_1 = c - ac$$
$$\text{pour } c - ac \leq ac \cdot \sqrt{2}$$

ou

$$d_{11} = d_1 = ac \cdot \sqrt{2}$$
$$\text{pour } ac \cdot \sqrt{2} \leq c - ac$$

et

$$d_{01} = d_{10} = d_0 = ac \sqrt{(1 - \sqrt{0,5})} \; .$$

3. Procédé de codage selon la revendication 2, **caractérisé en ce que**, pour le calcul des rayons optimaux (ac, c), on effectue l'hypothèse simplificatrice suivante :

$$d_1 \leq \sqrt{2} \cdot d_0.$$

4. Utilisation d'un récepteur comportant un décodeur à convolution, notamment un décodeur de Viterbi, pour la réception et le décodage, dont les paramètres de codage sont déterminés conformément aux étapes des revendications précédentes.

5. Utilisation selon la revendication 4, conformément à laquelle l'obtention de la porteuse est assistée par des signaux auxiliaires du codeur à convolution.

Fig.1.

# Fig.2.

EP 1 260 074 B1

BER

$E_b/N_0$ [dB]

TC16-PSK ———+———
2 ASK18PSK

**EP 1 260 074 B1**

**IN DER BESCHREIBUNG AUFGEFÜHRTE DOKUMENTE**

**In der Beschreibung aufgeführte Patentdokumente**

- DE 19529982 A1
- DE 19529983 A1
- US 6005897 A
- US 5931965 A

**In der Beschreibung aufgeführte Nicht-Patentliteratur**

- **Hayashi et al.** *IEEE Int. Conf. on Universal Personal Communications,* 06. November 1995, vol. 4, ISBN 0-7803-2995-4, 32-36